(19) Europäisches Patentamt
European Patent Office
Office européen des brevets

(11) Publication number: **0 000 006 B1**

(12) # EUROPEAN PATENT SPECIFICATION

(45) Date of publication of patent specification: **04.02.81**

(51) Int. Cl.³: **C 02 F 3/04**

(21) Application number: **78200030.1**

(22) Date of filing: **01.06.78**

(54) **Process for nitrification of waste water.**

(30) Priority: **06.06.77 NL 7706189**

(43) Date of publication of application: **20.12.78 Bulletin 78/1**

(45) Publication of the grant of the patent: **04.02.81 Bulletin 81/5**

(84) Designated Contracting States: **BE DE FR GB NL SE**

(56) References cited:
**DE-A-2 346 881**
**US-A-3 487 014**
**US-A-3 764 523**
**JOURNAL OF WATER POLLUTION CONTROL FEDERATION, vol. 46 May 1974, Washington, G. A. DUDDLES et al. »Plastic medium trickling filters for biological nitrogen control«, pages 937–946**
**JOURNAL OF WATER POLLUTION CONTROL FEDERATION, vol. 47, february 1975, Washington, D. D. McHARNESS »Field studies of nitrification with submerged filters«, pages 291–309**

(73) Proprietor: **STAMICARBON B.V., Postbus 10, NL-6160 MC Geleen (NL)**

(72) Inventor: **Bakker, Gerhard, Dross. Ecrevissestraat 17, 6171-El Stein (NL)**
Inventor: **Dijkstra, Fokke, Molenweg 54, Sittard (NL)**
Inventor: **Zeeman, Johannes Petrus, Ruys de Beerenbroucklaan 74, Born (NL)**

(74) Representative: **Van Leeuwen H.B. et al, Octrooibureau DSM Postbus 9, NL-6160 MA Geleen (NL)**

**EP 0 000 006 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Process for nitrification of waste water

The invention relates to a process for nitrification of oxidizable nitrogen compounds in waste water, with the aid of a gas containing molecular oxygen and of micro-organismus bound to an inert carrier material in a column, wherein the off gas of the column is vented and/or recycled, and, if necessary, part of the effluent is recycled.

A similar process is known from »Journal of Water Pollution Control Federation«, Vol. No. 47, February 1975, p. 291–309. This publication describes a process for the nitrification of waste water in a liquid-filled column. According to this process, waste water into which oxygen has been dissolved in a separate step is supplied to a liquid-filled column in which nitrifying micro-organisms have been bound to a solid inert carrier material.

This process has the drawback that only waste water streams with a relatively low nitrogen content can be purified. Moreover, the absolute quantity of dissolved organic material must be very low, as an excess of organic material results in partial clogging of the column with micro-organisms decomposing organic materials, so that channelling occurs.

While the first problem can be met by means of higher liquid loads through recirculation of part of the purified effluent after dissolving oxygen into it, however, as appears from the publication, this cannot readily be done.

In particular at higher liquid loads, that is to say at higher nitrogen contents of the waste water to be purified, the micro-organisms (activated sludge in general) are washed off from the carrier material, so that an additional column is needed to remove these micro-organisms from the waste water.

A possible solution to the problem raised by the purification, especially nitrification, of diluted waste water, containing nitrogen compounds, is the use of a trickle-phase reactor as is known from G.A. Duddles et al, Journal of Water Pollution Control Federation, vol. 46, May 1974, pp. 937–946. This however, leads to further problems in that the rate of nitrification and the sludge growths drop to undesirably low levels, and very large equipment is required.

The purpose of the invention is to provide a process for nitrification of waste water which has no such drawbacks.

This process is characterized in that a trickle-phase reactor is used as the column, and the gas containing molecular oxygen contains at least 25 w.-% of oxygen, that during the nitrification 0.5–10 w.-% of $CO_2$, with respect to the total quantity of molecular oxygen, is present in the column, that such a quantity of the liquid effluent of the reactor is recycled that the entire column contents are irrigated, and that the gas and the liquid contact each other counter-currently.

Preferably, the gas containing molecular oxygen contains at least 90 w.-% of molecular oxygen.

The process according to the invention has the advantage that waste water containing large quantities of nitrogen compounds can be purified without the need for excessively large columns. Furthermore the problem of sludge being washed off from the carrier material does not become significant.

It is of essential importance that during the nitrification 0.5 to 10 w.-% $CO_2$, referred to the total quantity of molecular oxygen, should be present. Preferably, 5–10 w.-% of $CO_2$ should be present.

If $CO_2$ is absent, the rate of nitrification is substantially lower than when $CO_2$ is present. Moreover, production of nitrifying sludge stagnates if no, or only little, $CO_2$ is present during the nitrification, which means that also in a trickle-phase reactor nitrification of waste water containing many impurities will lead to problems.

As gas containing molecular oxygen, by preference, technical oxygen or mixtures of air and technical oxygen are applied to which also carbon dioxide has been added. Technical oxygen is obtained by cryogenic air separation and it contains approximately 90 vol.-% of oxygen, 50 ppm $CO_2$ and, for the rest, nitrogen and traces of other gases, such as rare gases.

Two well-known bacterial genera nitrifying autotrophically are Nitrobacter and Nitrosomonas. The type mentioned last oxidizes $NH_4^+$ to $NO_2^-$ in the following manner:

$$2\,NH_4^+ + 3\,O_2 \rightarrow 2\,NO_2^- + 2\,H_2O + 4\,H^+ + \text{energy}$$

Nitrobacter oxidizes $NO_2^-$ further to $NO_3^-$:

$$2\,NO_2^- + O_2 \rightarrow 2\,NO_3^- + \text{energy}$$

These bacteria are autotrophic because they can assimilate cell material from carbon dioxide. The energy required for the assimilation originates from the oxidation of the nitrogen compounds.

The $CO_2$ addition here has an essentially different function than the addition of, for instance, methanol to a denitrification step, in which methanol functions as oxygen acceptor. Hence, in the denitrification, there is no point in adding $CO_2$.

The extent to which the gas supplied to the column is discharged again and/or recycled depends on a number of factors. In principle, the situation is such that a minor part of the gas mass must invariably be discharged because otherwise a quantity of inert gas will accumulate in the column.

If this is not done, the effectiveness of the nitrification will decrease. The inert gas originates from the gas supplied, which can in practically no case consist exclusively of $O_2$ and $CO_2$.

It is possible, however, to limit this discharge of gas to a considerable extent if the gas containing molecular oxygen consists to at least 90% of molecular oxygen. In that case the gas supply need not be larger than the quantity required for the nitrification.

However, should the gas containing molecular oxygen contain a considerable (more than 20%) amount of inert gas, it is to be preferred to discharge a larger quantity of gas from the column than is strictly necessary and to recycle part thereof. This will cause the gas velocity in the column to increase, as a result of which the gas mass in the column becomes mixed in a better way. Moreover, the risk of an inhomogeneous distribution of molecular oxygen in the column is avoided this way. Of course, at lower inert gas contents this risk is present to a much smaller extent. Preferably the vent amounts to 1 – 10 w.-% of the total circulating gas stream.

By preference, the recirculating waste water is given a pH value higher than 8 before being returned to the column. NaOH can be added very suitably for this purpose.

The process according to the invention offers the advantage that there is a possibility of smaller gas volumes and, hence, cheaper apparatus. Contrary, for instance, to a column in which outside air is aspirated in the bottom, part to be discharged again at the top, no strong cooling of the contents of the column occurs through water evaporation. In the process according to the invention an equilibrium is formed after some time owing to the gas mass being approximately saturated with water vapour.

If part of the gas stream is drained and the drain is made up again with fresh gas, a minor amount of water will be evaporated continuously. This quantity is not large, especially not because the drain forms only a very minor part of the total gas stream. The resultant temperature decrease will amount to at most a few tenths of a degree. If a gas saturated with water is used for make-up of the gas stream, there will be no difficulties resulting from a temperature decrease. The result of all this is that, during colder periods, one is not obliged to additionally heat either the waste water of the gas in connection with the risk of freezing or delay in the purification.

The process according to the invention is carried out in a column suitable for gas/liquid contact which is a trickle-phase reactor and wherein the gas and the waste water are contacted counter-currently. The pressure at which the process is carried out is not critical. Atmospheric pressure is applied to advantage, but also higher or lower pressures are applicable. It is noted that the presence of micro-organisms on an inert carrier material is a well-known fact.

It is particularly advantageous to carry out the process so that nitrification does not proceed completely to nitrate, but partly only to nitrite. Notably in a subsequent denitrifying step, if any, this yields a saving on the amount of carbon source, like methanol, which is to be added. This effect is achieved by taking care that the formation of nitrate from nitrite is checked, which is possible by either seeing to it that no nitrate-forming organisms are present in the sludge, or that the organisms present are restrained. Also if the sludge is loaded with waste water containing $NH_4^+-N$ in a high concentration, conversion to, mainly, nitrite is obtained.

The invention will now be elucidated with the aid of an example which shows that the process described above is applicable for industrial waste water. The example and the tests are not limiting.

## Example

Into the top of a trickle-phase reactor having a volume of 5.0 litres, which contains 4 litres of Berl saddles with sludge applied to them, waste water from a chemical industry is supplied which contains a variable quantity of ammoniacal nitrogen. At the same time 0.026 $m^3$ of a gas mixture consisting of 5 w.-% of $CO_2$, 94.8 w.-% of $O_2$ and 0.2 w.-% of inert gas is led counter-currently with the liquid. The recycle of the liquid effluent over the column amounted to about 3.1 litres/h. The gas was completely recirculated, while the consumed gas was made up. The inert gas dissolved in the liquid phase.

In the following table the results are given of tests in which both the flow over the column and the concentration of $NH_4^+-N$ are varied.

Table 1

| test no. | flow l/h | supply (mg/l) | | discharge (mg/l) | | efficiency % |
|---|---|---|---|---|---|---|
| | | $NH_4^+-N$ | $NO_3^--N$ | $NH_4^+-N$ | $(NO_2^- + NO_3^-)-N$ | |
| 1 | 0.092 | 336 | 18 | 2 | 352 | 99 |
| 2 | 0.090 | 419 | 10 | 4 | 425 | 99 |
| 3 | 0.092 | 652 | 14 | 13 | 653 | 98 |
| 4 | 0.088 | 739 | 13 | 16 | 736 | 98 |
| 5 | 0.093 | 1125 | 12 | 204 | 933 | 82 |
| 6 | 0.021 | 792 | 40 | 64 | 768 | 92 |
| 7 | 0.021 | 1046 | 35 | 88 | 993 | 92 |
| 8 | 0.021 | 1216 | 24 | 25 | 1215 | 98 |
| 9 | 0.040 | 752 | 19 | 55 | 716 | 93 |
| 10 | 0.041 | 1064 | 21 | 59 | 1026 | 94 |
| 11 | 0.041 | 1355 | 25 | 172 | 1208 | 87 |
| 12 | 0.042 | 1380 | 13 | 10 | 1240 | 99 |
| 13 | 0.042 | 1920 | 13 | 20 | 1760 | 90 |
| 14 | 0.042 | 1980 | 20 | 20 | 1900 | 99 |

**Claims**

1. Process for nitrifying oxidizable nitrogen compounds in waste water, with the aid of a gas containing molecular oxygen and of micro-organisms bound to an inert carrier material in a column, wherein the off-gas of the column is vented and/or recycled and, if necessary, part of the effluent is recycled, this process being characterized in that a tricklephase reactor is used as column, that the gas containing molecular oxygen contains at least 25 w.-% of oxygen, that during the nitrification 0.5 – 10 w.-% of $CO_2$, referred to the total quantity of oxygen, is present in the column, that such a quantity of the liquid effluent of the column is recycled that the entire column contents are irrigated, and that the gas and the liquid contact each other countercurrently.

2. Process according to claim 1, characterized in that the gas contains at least 90 w.-% of molecular oxygen.

3. Process according to claim 1 or 2, characterized in that 5 – 10 w.-% of $CO_2$, referred to the total quantity of molecular oxygen, is present.

4. Process according to the claims 1, 2 or 3, characterized in that the vent amounts to 1 – 10 w.-% of the total circulating gas stream.

5. Process according to the claims 1 – 4, characterized in that the liquid effluent, prior to its return to the column, is given a pH value of at least 8.

6. Process according to the claims 1 – 5, characterized in that the gas containing molecular oxygen, which is supplied to the column, is saturated with water vapour.

7. Process according to the claims 1 – 6, characterized in that the nitrification mainly proceeds to nitrite.

**Patentansprüche**

1. Verfahren zum Nitrifizieren oxidierbarer Stickstoffverbindungen in Abwasser mit Hilfe eines Molekularsauerstoff enthaltenden Gases und von Mikroorganismen, die auf einem Trägermaterial in eine Kolonne aufgebracht sind, wobei man das Abgas der Kolonne abläßt und/oder zurückführt und, falls notwendig, einen Teil des flüssigen Ablaufs zurückführt, dadurch gekennzeichnet, daß man als Kolonne einen Berieselungsreaktor einsetzt, daß das Molekularsauerstoff enthaltende Gas zumindest 25 Gew.-% Molekularsauerstoff enthält, daß während des Nitrifizierens 0,5 – 10 Gew.-% $CO_2$, bezogen auf die Gesamtsauerstoffmenge, in der Kolonne enthalten sind, daß man soviel vom flüssigen Ablauf der Kolonne zurückführt, daß

eine vollständige Berieselung des Kolonneninhalts auftritt und daß das Gas und die Flüssigkeit im Gegenstrom miteinander in Berührung kommen.

2. Verfahren nach Anspruch 1, dadurch gekennzeichnet, daß das Gas mindestens 90 Gew.-% Molekularsauerstoff enthält.

3. Verfahren nach Anspruch 1 oder 2, dadurch gekennzeichnet, daß 5–10 Gew.-% $CO_2$, bezogen auf die Gesamtmenge des Molekularsauerstoffs, vorhanden sind.

4. Verfahren nach Anspruch 1, 2 oder 3, dadurch gekennzeichnet, daß der Ablaß 1–10 Gew.-% des gesamten umlaufenden Gasstroms beträgt.

5. Verfahren nach Anspruch 1–4, dadurch gekennzeichnet, daß man den flüssigen Ablauf, ehe er der Kolonne zurückgeführt wird, auf einen pH-Wert von mindestens 8 bringt.

6. Verfahren nach Anspruch 1–5, dadurch gekennzeichnet, daß das Molekularsauerstoff enthaltende Gas, das man der Kolonne zuführt, wasserdampfgesättigt ist.

7. Verfahren nach Anspruch 1–6, dadurch gekennzeichnet, daß die Nitrifizierung hauptsächlich zu Nitrit verläuft.

**Revendications**

1. Procédé de nitrification de composés azotés oxydables dans des eaux résiduaires à l'aide d'un gaz contenant de l'oxygène moléculaire et de micro-organismes, qui ont été déposés sur un support inerte dans une colonne, le gaz résiduaire de la colonne étant purgé et/ou mis en récirculation et, si besoin en est, une partie de l'effluent liquide étant mis en récirculation, caractérisé en ce qu'on utilise un réacteur de ruissellement comme colonne, que le gaz contenant de l'oxygène moléculaire contient au moins 25% en poids d'oxygène moléculaire, que durant la nitrification il se trouve dans la colonne 0,5–10% en poids de $CO_2$ calculés par rapport à la quantité totale d'oxygène, qu'on fait récirculer une quantité d'effluent liquide de la colonne telle que le contenu de la colonne soit entièrement arrosé et que le gaz et le liquide se mettent en contact à contrecourant l'un avec l'autre.

2. Procédé selon la revendication 1, caractérisé en ce que le gaz contient au moins 90% en poids d'oxygène moléculaire.

3. Procédé selon l'une des revendications 1 à 2, caractérisé en ce qu'il se trouve dans la colonne 5–10% en poids de $CO_2$, calculés par rapport à la quantité totale d'oxygène moléculaire.

4. Procédé selon l'une des revendications 1 à 3, caractérisé en ce que la purge est de 1–10% en poids du courant de gaz total en récirculation.

5. Procédé selon l'une des revendications 1 à 4, caractérisé en ce que le pH de l'effluent liquide est porté à une valeur de 8 au minimum avant que l'effluent liquide soit ramené à la colonne.

6. Procédé selon l'une des revendications 1–5, caractérisé en ce que le gaz contenant de l'oxygène moléculaire que l'on amène à la colonne est saturé de vapeur d'eau.

7. Procédé selon l'une des revendications 1 à 6, caractérisé en ce que la nitrification s'effectue essentiellement jusqu'au stade de nitrite.